# FASCICULE DE BREVET EUROPEEN

(11) **EP 0 842 823 B1**
(45) Date de publication et mention de la délivrance du brevet: **04.10.2001**
(21) Numéro de dépôt: 97402728.6
(22) Date de dépôt: 14.11.1997
(51) Int. Cl.: B60R 13/04, F16B 5/12, B60J 10/00

(54) **Nouveau profilé en un matériau polymère, destiné à être fixé par clipsage sur des têtes de plots rigides**
Neues Profil aus polymerem Material, geeignet zum Einschnappen an Karosseriestiften
New profile made of polymeric material suitable for clipping on vehicle body pins

(30) Priorité: 19.11.1996 FR 9614070
(43) Date de publication de la demande: 20.05.1998
(73) Titulaire: Société Anonyme dite: MESNEL, 92000 Nanterre (FR)
(72) Inventeur: Hardy, Françis, 76520 Boos (FR)
(74) Mandataire: Jolly, Jean-Pierre

(56) Documents cités:
- EP-A- 0 606 801
- EP-A- 0 663 323
- DE-A- 2 506 680
- FR-A- 1 505 136

## Description

La présente invention concerne un nouveau profilé en un matériau polymère, de préférence à armature métallique, destiné à être fixé par clipsage sur des têtes de plots rigides, notamment en vue d'équiper des carrosseries d'automobiles.

Il existe de très nombreux types de profilés destinés à être fixés sur une carrosserie d'automobile, notamment par clipsage sur des têtes de plots rigides faisant saillie à la surface de cette carrosserie. De tels profilés sont utilisés, en particulier, comme joints de double étanchéité de bas de caisse d'automobile ou comme joints anti-salissure. Ils sont généralement réalisés par extrusion ou co-extrusion d'une ou de plusieurs matières thermoplastiques ou de caoutchouc et ils peuvent éventuellement comporter une armature métallique noyée dans l'une des matières extrudées.

Les profilés connus de ce type sont habituellement en un matériau relativement dur, permettant de les clipser sous pression sur la tête de plots rigides à section en T, prévus dans ce but à la surface de la carrosserie d'automobile, sur la tôle de laquelle ils sont soudés.

Dans EP-A-0606 801, la Demanderesse a proposé, pour une telle utilisation, des profilés dans lesquels le corps du profilé est en un matériau polymère relativement souple, en élastomère par exemple, tandis que les parties destinées à être engagées par clipsage au-dessous de la tête des plots sont en un matériau polymère plus dur, par exemple à base d'une polyoléfine, réticulée ou non, et sont co-extrudées avec le corps du profilé.

Les profilés décrits dans cette demande antérieure comprennent :
- d'une part, un corps en une première matière polymère, ce corps comprenant deux parties tubulaires destinées à être placées de part et d'autre des plots, ces parties tubulaires étant réunies par une partie formant pont, destinée à être disposée au-dessus des têtes des plots, et
- d'autre part, attenantes chacune à une paroi souple de l'une des parties tubulaires et faisant saillie par rapport à celle-ci au-dessous de la partie formant pont, en une position telle qu'elles peuvent se clipser au-dessous de la tête de plots, deux lèvres en une seconde matière polymère d'une dureté plus élevée que celle de la première matière, le corps et les deux lèvres provenant d'une unique opération de co-extrusion.

Du fait que les lèvres destinées à être clipsées sont attenantes à une paroi souple d'une partie tubulaire, ces parois peuvent se déformer latéralement, lors de la mise en place du profilé sur les plots, ou s'écarter l'une de l'autre, pour reprendre ensuite leur position initiale par élasticité.

Dans EP-A-0 663 323, correspondant au préambule de la revendication 1, la Demanderesse a ensuite suggéré de supprimer les parties tubulaires du profilé qui vient d'être décrit et elle a proposé dans ce but un profilé en au moins un matériau polymère, destiné à être fixé par clipsage sur la tête de plots rigides à section en T, en particulier de plots faisant saillie à la surface d'une carrosserie d'automobile, ce profilé étant caractérisé en ce qu'il comprend :
- d'une part, un corps en une première matière polymère thermoplastique, ce corps ayant une section en C et étant destiné à coiffer la tête des plots, avec la partie concave du C tournée vers les plots, et
- d'autre part, attenantes à chacun des bords latéraux du corps à section en C et destinées à faire saillie en direction l'une de l'autre au-dessous de la partie concave du C, en vue d'être engagées sous la tête des plots, deux lèvres en une seconde matière polymère thermoplastique d'une dureté plus élevée que celle de la première,
le corps et les deux lèvres dures provenant d'une unique opération de co-extrusion.

La mise en place du profilé s'effectue en le disposant au-dessus des plots, avec sa concavité tournée vers ceux-ci, et en exerçant une pression sur lui en direction des plots, de manière à écarter l'un de l'autre les bords du corps à section en C et les lèvres attenantes, pour pouvoir amener librement le corps en contact avec la tête des plots. En supprimant la pression exercée, les bords du corps à section en C reviennent à leur position initiale, en se rapprochant l'un de l'autre, et les lèvres dures du profilé viennent ainsi s'engager au-dessous de la tête des plots, en rendant le profilé solidaire de ceux-ci.

Ce profilé, comme le précédent, est mis en place mécaniquement sur les carrosseries d'automobiles, ce qui impose une parfaite rigidité du profilé, ce que l'on obtient en utilisant un polymère rigide et/ou en équipant le profilé d'une armature métallique, constituée par exemple par un feuillard plein en acier ou en aluminium, éventuellement noyé dans le polymère.

Cette rigidité du profilé présente toufefois l'inconvénient, lors de la mise en place sur les plots d'une carrosserie d'automobile, de nécessiter une opération préalable de conformage du profilé à la forme de la surface de cette carrosserie. En outre, elle ne se prête pas à une application parfaite du profilé contre la surface de la carrosserie, en tout emplacement de celle-ci, en raison des défauts de surface de la tôle.

La présente invention vise à remédier à ces inconvénients en proposant un profilé du type rappelé ci-dessus, qui puisse être équipé d'une armature semi-rigide, lui permettant ainsi d'épouser fidèlement le profil de la carrosserie, sans opérations préalables de conformage, tout en absorbant les inégalités de surface de la tôle.

L'invention vise également à proposer un tel profilé, qui puisse être rendu solidaire des plots d'une carrosserie d'automobile sans avoir recours à des systèmes de robot.

L'invention vise enfin à proposer un profilé de ce type, qui puisse être facilement mis en place par clipsage sur des plots de carrosserie d'automobile, tout en assurant ensuite un excellent verrouillage en position du profilé clipsé sur ces plots.

A cet effet, l'invention a pour objet un profilé en au moins un matériau polymère, destiné à être fixé par clipsage sur la tête de plots rigides à section en T, en particulier de plots faisant saillie à la surface d'une carrosserie d'automobile, ce profilé ayant été fabriqué par extrusion et comprenant :
- d'une part, un corps longitudinal en une première matière polymère thermoplastique ou en caoutchouc, ce corps ayant une section transversale en C et étant destiné à coiffer la tête des plots, avec la partie concave du C tournée vers les plots, et
- d'autre part, attenantes à chacun des bords latéraux du corps à section en C et destinées à faire saillie en direction l'une de l'autre au-dessous de la partie concave du C, en vue d'être engagées sous la tête des plots, deux lèvres dures en une seconde matière polymère thermoplastique d'une dureté plus élevée que celle de la première,

ce profilé étant caractérisé en ce qu'une membrane déformable, s'étendant sensiblement suivant toute la longueur du profilé, réunit transversalement les deux branches du corps à section transversale en C, cette membrane étant positionnée de façon telle que, lorsque le profilé n'est pas clipsé sur les plots, elle est sensiblement perpendiculaire au plan de symétrie du C et que, lorsque le profilé est clipsé sur les têtes des plots, ces têtes sollicitent la membrane en la déformant et en l'écartant des lèvres dures.

Pour clipser le profilé sur les têtes de plots, il suffit donc de l'amener au-dessus de celles-ci, avec la partie concave du corps à section en C tournée vers ces têtes, et d'exercer une pression sur le profilé, de façon à écarter l'une de l'autre les lèvres dures, qui reviennent ensuite s'engager par élasticité au-dessous des têtes des plots, sans qu'il soit nécessaire d'utiliser de système motorisé.

De par son élasticité, la membrane déformée par les têtes des plots sera maintenue fermement appliquée contre celles-ci et les têtes seront donc pincées entre les lèvres dures et la membrane, ce qui assurera un excellent verrouillage en position du profilé.

Cette membrane évitera, en outre, un contact direct entre les têtes des plots et le corps du profilé.

Naturellement, celui-ci peut comporter sur sa partie externe différents organes d'étanchéité et/ou d'ornementation, suivant le rôle qui lui est dévolu.

Le corps du profilé pourra être notamment en caoutchouc, par exemple en E.P.D.M., ou bien en une matière thermoplastique, et avoir une dureté SHORE A comprise entre 50 et 80, la dureté pouvant être différente en différents emplacements d'une même section transversale, en fonction de l'effet recherché.

Les lèvres venant se clipser sous la tête des plots seront en un matériau plus dur, d'une dureté d'au moins environ 50 SHORE D.

Ces lèvres devront naturellement être en un matériau compatible avec celui constituant le corps du profilé. Elles pourront être, par exemple, en caoutchouc dur, en polyéthylène, en polypropylène, en polyamide ou en polyuréthane, seuls ou en divers mélanges mutuels et/ou avec d'autres matières thermoplastiques. On mentionnera notamment le matériau commercialisé sous l'appellation HYTREL (marque déposée), par la Société Dupont de Nemours.

Le corps du profilé pourra avantageusement comporter une armature métallique constituée par un feuillard semi-rigide, c'est-à-dire déformable élastiquement, par exemple en aluminium ou en acier. Cette armature aura elle-même une section transversale en C et elle sera noyée dans le corps en le premier polymère, ou bien elle supportera ce premier polymère, qui sera extrudé alors sur sa surface externe convexe.

Ce feuillard comportera de préférence des découpes et/ou une ou des incisions ou entailles à mi-chair, disposées longitudinalement et destinées à lui permettre de se déformer aisément, lorsque le profilé vient se clipser sur les têtes des plots de la carrosserie.

Le profilé sera fabriqué par co-extrusion du corps en ce premier polymère, de la membrane et des lèvres, en présence de l'armature métallique.

Une forme de réalisation d'un tel profilé va être décrite ci-après plus en détail, à titre d'exemple non limitatif, en référence aux dessins annexés. Sur ces dessins :
La figure 1 est une coupe transversale du profilé ;
La figure 2 est une vue en coupe, illustrant la position du profilé sur des plots soudés sur la surface externe d'une carrosserie d'automobile.

Comme on le voit sur les dessins, dans cette forme de réalisation, le profilé comprend un corps 1, en caoutchouc, qui présente un plan de symétrie. Ce corps 1 présente une section transversale en C, et il est supporté par une armature métallique semi-rigide 2, par exemple en acier ou en aluminium, également à section en C, sur la surface convexe de laquelle a été extrudé le corps 1.

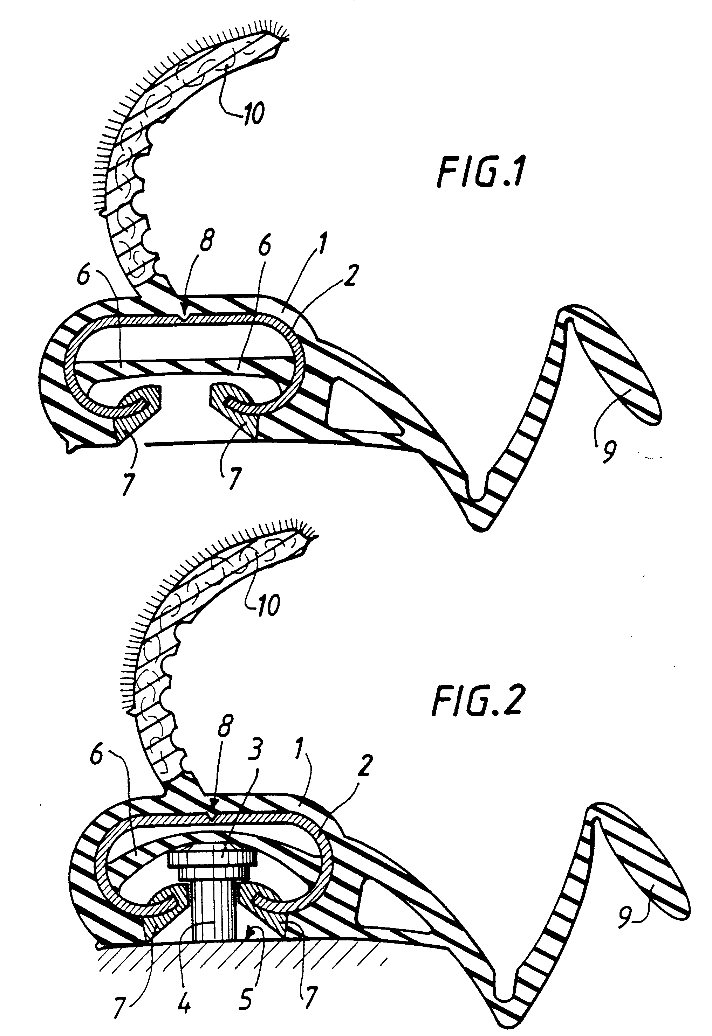

Comme représenté sur la figure 2, ce profilé est destiné à être fixé par clipsage sur la tête 3 de plots 4 à section en T, faisant saillie à la surface d'une carrosserie 5 d'automobile, sur laquelle ils sont soudés.

Dans ce but, deux lèvres dures 7, en un matériau thermoplastique plus dur que le caoutchouc dont est constitué le corps 1, sont attenantes aux bords latéraux du corps du profilé à section en C et font saillie en direction l'une de l'autre au-dessous de la partie centrale du corps C, en une position telle qu'elles puissent venir se clipser sous la tête 3 des plots 4, avec une partie appliquée contre la surface inférieure de la tête des plots. Ces lèvres sont coextrudées avec le corps 1 du profilé.

Conformément à l'invention, le corps 1 comprend une membrane transversale 6, qui ici est en le même polymère que ce corps 1, cette membrane réunissant transversalement les deux branches du C. Cette membrane 6 s'étend sensiblement suivant toute la longueur du profilé et est disposée de façon telle qu'en position de repos (figure 1), c'est-à-dire quant le profilé n'est pas clipsé sur les têtes des plots de fixation, elle est sensiblement perpendiculaire au plan de symétrie du corps 1, tandis que lorsque le profilé est clipsé sur les têtes des plots (figure 2), ces têtes déforment la membrane 6 et la repoussent en direction de la partie en vis-à-vis du C. Dans cette position, la membrane est sous tension élastique et le profilé est ainsi maintenu fermement en position sur les têtes des plots.

La membrane 6 peut éventuellement être en matériau différent de celui du corps, afin de présenter certaines caractéristiques désirables.

On voit que le profilé conforme à l'invention est autoclipsable, c'est-à-dire qu'après l'avoir amené au-dessus des plots 4, avec la face concave du corps 1 tournée vers les têtes 3 de ces plots, il suffit d'exercer une pression sur le corps pour que les lèvres 7 s'effacent en s'écartant l'une de l'autre, pour laisser pénétrer la tête 3 à l'intérieur du corps 1 et revenir ensuite, par élasticité du corps 1, s'engager au-dessous de ces têtes.

Afin de faciliter la déformation du profilé et d'éviter d'avoir recours à des systèmes robotisés pour sa mise en place sur les plots, au moins une incision 8 disposée longitudinalement sera pratiquée à mi-chair dans l'armature 2, par exemple à partir de la face de celui-ci non tournée vers la membrane 6 et dans le plan de symétrie du corps 1, comme représenté sur les dessins.

On notera que cette armature déformable présente en outre l'intérêt que le profilé peut épouser fidèlement la surface de la carrosserie, malgré les défauts de fabrication de celle-ci, en compensant les différences de niveau, les jeux et les tolérances qui peuvent exister. En outre, il est ainsi possible de se dispenser d'une opération de conformage du profilé à la forme de la carrosserie avant sa mise en place sur les plots.

On notera également que la membrane 6 évite tout contact direct entre les têtes des plots et l'armature ou le corps du profilé et qu'elle amortit leurs mouvements relatifs par rapport aux plots, sous l'effet de vibrations par exemple.

Il est clair que le profilé conforme à l'invention peut être réalisé facilement, par co-extrusion du corps 1, de la membrane 6 et des lèvres 7. Ces lèvres peuvent naturellement avoir une forme autre que celle représentée sur le dessin.

Ce profilé peut être utilisé dans toutes les applications auxquelles sont destinés les profilés fixés sur les carrosseries d'automobiles, notamment des profilés de double étanchéité, de bas de caisse, de toiture et anti-salissure.

Dans le cas du dessin, par exemple, le profilé comporte une lèvre 9, attenante latéralement au corps 1 et constituée du même polymère, qui sert de gouttière, tandis qu'une seconde lèvre 10, en E.P.D.M., fait saillie à l'extérieur du corps 1, du côté opposé aux plots 4, dans un but d'étanchéité.

## Revendications

1. Profilé en au moins un matériau polymère, destiné à être fixé par clipsage sur la tête (3) de plots rigides (4) à section en T, en particulier de plots faisant saillie à la surface d'une carrosserie (5) d'automobile, ce profilé ayant été fabriqué par extrusion et comprenant :
- d'une part, un corps longitudinal (1) en une première matière polymère thermoplastique ou en caoutchouc, ce corps (1) ayant une section transversale en C et étant destiné à coiffer la tête (3) des plots (4), avec la partie concave du C tournée vers les plots, et
- d'autre part, attenantes à chacun des bords latéraux du corps (1) à section en C et destinées à faire saillie en direction l'une de l'autre au-dessous de la partie concave du C, en vue d'être engagées sous la tête (3) des plots (4), deux lèvres dures (7) en une seconde matière polymère thermoplastique d'une dureté plus élevée que celle de la première,
ce profilé étant **caractérisé en ce qu'**une membrane déformable (6), s'étendant sensiblement suivant toute la longueur du profilé, réunit transversalement les deux branches du corps (1) à section transversale en C, cette membrane (6) étant positionnée de façon telle que, lorsque le profilé n'est pas clipsé sur les plots (4), elle est sensiblement perpendiculaire au plan de symétrie du C et que, lorsque le profilé est clipsé sur les têtes (3) des plots, ces têtes sollicitent la membrane (6) en la déformant et en l'écartant des lèvres dures (7).

2. Profilé, selon la revendication 1, **caractérisé en ce que** la membrane (6) est en le même polymère que le corps (1) du profilé.

3. Profilé, selon la revendication 1, **caractérisé en ce que** la membrane est en un matériau différent de celui du corps (1) du profilé.

4. Profilé, selon l'une des revendications 1 à 3, **caractérisé en ce que** le corps (1), les deux lèvres dures (7) et la membrane 6 proviennent d'une unique opération de co-extrusion.

5. Profilé, selon l'une des revendications 1 à 4, **caractérisé en ce que** le corps (1) est en E.P.D.M, d'une dureté SHORE A comprise entre 50 et 80.

6. Profilé selon l'une des revendications 1 à 5, **caractérisé en ce que** les lèvres (7) ont une dureté d'au moins environ 50 SHORE D.

7. Profilé selon l'une des revendications 1 à 6, **caractérisé en ce qu'**il comporte une armature métallique semi-rigide (2) à section transversale en C, noyée dans la masse du corps (1), ou sur la face convexe de laquelle est appliqué le matériau constitutif du corps (1).

8. Profilé, selon la revendication 7, **caractérisé en ce que** l'armature (2) est en acier ou aluminium.

9. Profilé, selon l'une des revendications 7 et 8, **caractérisé en ce que** l'armature (2) comporte au moins une incision (8) à mi-chair disposée longitudinalement.

10. Profilé, selon la revendication 9, **caractérisée en ce que** l'incision (8) à mi-chair de l'armature (2) est disposée suivant le plan de symétrie du corps du profilé.

11. Profilé, selon l'une des revendications 9 et 10, **caractérisé en ce que** l'incision 6 est pratiquée dans l'armature (2) à partir de la surface de celle-ci non tournée vers la membrane 6.

## Claims

1. A profile of at least one polymeric material, designed to be fixed by clipping onto the heads (3) of rigid T-section studs (4), in particular studs projecting from the surface of motor vehicle bodywork (5), said profile being manufactured by extrusion and comprising:
- on the one hand, a longitudinal body (1) of a first thermoplastic polymeric material or of rubber, this body (1) having a C-shaped cross section and being designed to cover the heads (3) of the studs (4), with the concave part of the C facing the studs, and
- on the other hand, adjoining each of the lateral edges of the C-section body (1) and designed to project towards one another under the concave part of the C, with a view to engaging under the heads (3) of the studs (4), two hard lips (7) of a second thermoplastic polymeric material harder than the first,
said profile being **characterised in that** a deformable diaphragm (6), extending substantially along the whole length of the profile, transversely connects the two branches of the body (1) of C-shaped cross section, said diaphragm (6) being positioned in such a way that, when the profile is not clipped onto the studs (4), it is substantially perpendicular to the plane of symmetry of the C and, when the profile is clipped onto the heads (3) of the studs, these heads stress the diaphragm (6), deforming it and moving it away from the hard lips (7).

2. A profile according to claim 1, **characterised in that** the diaphragm (6) is of the same polymer as the body (1) of the profile.

3. A profile according to claim 1, **characterised in that** the diaphragm is of a different material from that of the body (1) of the profile.

4. A profile according to one of claims 1 to 3, **characterised in that** the body (1), the two hard lips (7) and the diaphragm (6) are produced by a single co-extrusion operation.

5. A profile according to one of claims 1 to 4, **characterised in that** the body (1) is of EPDM, having a SHORE A hardness of between 50 and 80.

6. A profile according to one of claims 1 to 5, **characterised in that** the lips (7) have a SHORE D hardness of at least approximately 50.

7. A profile according to one of claims 1 to 6, **characterised in that** it comprises a semi-rigid metal reinforcement (2) of C-shaped cross section, embedded in the body (1) or on the convex face of which there is applied the material constituting the body (1).

8. A profile according to claim 7, **characterised in that** the reinforcement (2) is of steel or aluminium.

9. A profile according to one of claims 7 and 8, **characterised in that** the reinforcement (2) comprises at least one longitudinally disposed incision (8) through half the thickness thereof.

10. A profile according to claim 9, **characterised in that** the half-thickness incision into the reinforcement (2) is disposed along the plane of symmetry of the profile body.

11. A profile according to one of claims 9 and 10, **characterised in that** the incision (6) is formed in the reinforcement (2) from the surface thereof which does not face the diaphragm (6).

## Patentansprüche

1. Profil aus mindestens einem polymeren Material, zur Befestigung durch Einklipsen an dem Kopf (3) von starren Stiften (4) mit T-förmigem Querschnitt, insbesondere aus der Oberfläche einer Kraftfahrzeugkarosserie (5) vorstehenden Stiften, wobei das Profil durch Extrusion hergestellt ist und aufweist:
- einerseits einen Längskörper (1) aus einem ersten thermoplastischen Polymer oder aus Kautschuk, wobei dieser Körper (1) einen C-förmigen Querschnitt aufweist und dazu bestimmt ist, den Kopf (3) der Stifte (4) mit dem zu den Stiften hin gewandten konkaven Bereich der C-Form zu bedecken und
- andererseits angrenzend an jeden der seitlichen Ränder des Körpers (1) mit C-förmigem Querschnitt und gegeneinander gerichtet unterhalb des konkaven Bereichs der C-Form und vorstehend zum Eingreifen unterhalb des Kopfes (3) der Stifte (4) zwei harte Lippen (7) aus einem zweiten thermoplastischen Polymer mit einer größeren Härte als das erste,
**dadurch gekennzeichnet, daß** sich eine verformbare Membran (6) im Wesentlichen über die ganze Länge des Profils erstreckt und eine Querverbindung zwischen den beiden Schenkeln des Körpers (1) mit C-förmigem Querschnitt bildet, wobei diese Membran (6) so angeordnet ist, **daß**, wenn das Profil nicht auf den Stiften (4) eingeklipst ist, sie sich im wesentlichen senkrecht zur Symmetrieebene des C erstreckt und **daß**, wenn das Profil auf den Köpfen (3) der Stifte (4) eingeklipst ist, diese Köpfe die Membran (6) spannen, während sie diese verformen und von den harten Lippen (7) weg bewegen.

2. Profil nach Anspruch 1, **dadurch gekennzeichnet, daß** die Membran (6) aus dem gleichen Polymer besteht wie der Profilkörper (1).

3. Profil nach Anspruch 1, **dadurch gekennzeichnet, daß** die Membran (6) aus einem anderen Material besteht als der Profilkörper (1).

4. Profil nach einem der Ansprüche 1 bis 3, **dadurch gekennzeichnet, daß** der Körper (1), die beiden harten Lippen (7) und die Membran (6) in einem einzigen Koextrusionsvorgang hergestellt werden.

5. Profil nach einem der Ansprüche 1 bis 4, **dadurch gekennzeichnet, daß** der Körper (1) aus Ethylen-Propylen-Dien-Monomer (EPDM) mit einer Shore A-Härte zwischen 50 und 80 besteht.

6. Profil nach einem der Ansprüche 1 bis 5, **dadurch gekennzeichnet, daß** die Lippen (7) eine Shore D-Härte von mindestens etwa 50 aufweisen.

7. Profil nach einem der Ansprüche 1 bis 6, **dadurch gekennzeichnet, daß** eine halbstarre Metallarmierung (2) mit C-förmigem Querschnitt in der Masse des Körpers (1) eingebettet ist oder **daß** das Material, das den Körper (1) bildet, auf der konvexen Seite dieser Armierung aufgebracht ist.

8. Profil nach Anspruch 7, **dadurch gekennzeichnet, daß** die Armierung (2) aus Stahl oder aus Aluminium besteht.

9. Profil nach einem der Ansprüche 7 und 8, **dadurch gekennzeichnet, daß** die Armierung (2) mindestens einen in der Mitte in Längsrichtung verlaufenden Einschnitt (8) aufweist.

10. Profil nach Anspruch 9, **dadurch gekennzeichnet, daß** der Einschnitt (8) in der Mitte der Armierung (2) in der Symmetrieebene des Profilkörpers angeordnet ist.

11. Profil nach einem der Ansprüche 9 und 10, **dadurch gekennzeichnet, daß** der Einschnitt (8) in der Armierung (2) von der Seite aus angebracht ist, die nicht der Membran (6) zugewandt ist.
